# EUROPEAN PATENT SPECIFICATION

(11) **EP 2 905 852 B1**
(45) Date of publication and mention of the grant of the patent: **09.09.2020**
(21) Application number: 14382044.7
(22) Date of filing: 06.02.2014
(51) Int. Cl.: H02B 1/18

(54) **Electrical low-voltage power distribution equipment**
Elektrische Niederspannungsverteiler
Dispositif de distribution électrique à basse tension

(43) Date of publication of application: 12.08.2015
(73) Proprietor: Ormazabal Y Cia., S.L.U., 48140 Igorre (Vizcaya) (ES)
(72) Inventor: SEBASTIAN MARTÍN, Sergio, 48140 IGORRE (Vizcaya) (ES); ZAUTUA BILBAO, Igor, 48140 IGORRE (Vizcaya) (ES); CORMENZANA LOPEZ, Javier, 48140 IGORRE (Vizcaya) (ES); SABAS FERNANDEZ, José,Luis, 48140 IGORRE (Vizcaya) (ES)
(74) Representative: Carpintero Lopez, Francisco

(56) References cited:
- DE-A1- 2 506 437
- DE-A1-102010 051 642
- US-A- 1 400 950
- US-A- 1 700 757

## Description

### Object of the Invention

The present invention relates to electrical low-voltage power distribution equipment which allows distributing electrical power to different consumers once the power has been transformed to the low-voltage range using handling and/or protection means, measuring means, etc.

The object of the invention is to separate the busbars from the electrical equipment and to insulate said set of busbars with respect to the different electrical components of the same equipment such that the equipment can be expanded to allow supplying power to a larger number of consumers, maintaining an IP protection rating of IP2X at all times.

### Background of the Invention

Basically, electrical low-voltage power distribution equipment, also referred to as a low-voltage switchboard, comprises a metal or insulating enclosure inside which the different electrical components, such as the set of line connection busbars of the switchboard, the set of distribution busbars, outlets with a fuse-holder base, handling means comprising the function of insulating the low-voltage switchboard from the power supply and/or the function of grounding the set of distribution busbars, as well as the auxiliary and measuring circuit outlet, are installed.

The purpose of the set of line connection busbar is to electrically connect the conductors coming from the medium-voltage/low-voltage transformer with the set of distribution busbars, the purpose of this last set of busbars being to pass the power coming from the set of line connection busbars to the different outlets with a fuse-holder base.

Both the set of line connection busbars and the set of distribution busbars, which are usually made of copper, are exposed with the subsequent safety risk for people and possible internal electrical defects in the low-voltage switchboard. These internal defects can cause various problems, the severity of these problems depending on whether or not an internal arc is generated.

Specifically, even if an internal arc is not generated, the following problems can arise:
- Mechanical stress in all current conducting components, such as contacts, cable terminals, etc.
- Heating of all current conducting components, particularly at points of highest resistance, such as busbar joints, sliding contacts, bypasses, lower sections, etc.
- Heating of the connections and possible fire in the electrical equipment. And if an internal arc is generated, the following problems may arise:
- Mechanical stress in all current conducting components, such as contacts, cable terminals, etc.
- A high temperature gradient due to the rapid and intense heating of the air. Specifically, the thermal effects due to the high temperature reached in the arc cause a transfer of energy irradiated to nearby components and as a result, the metals melt, insulating materials burn forming gases, vapors and fumes that can be given off from the low-voltage switchboard.
- High pressure gradient in the form of a pressure wave. The mechanical effect due to the arc phenomenon is an explosive-type effect and generates a pressure wave caused by the sudden heating of a small volume of air. Therefore, there is a high risk that parts may be projected, being potentially dangerous.
- High air ionization with a decrease in dielectric strength.

On the other hand, since it is an air-tight insulation, the distance between active live parts and the metal enclosure of the low-voltage switchboard, as well as between the phases of the set of busbars, is very important in terms of safety, so a decrease in this distance, to try to reduce the size of the switchboard and obtain a more compact switchboard, could entail an very high risk of accidents. Furthermore, due to the air-tight insulation the busbars may corrode.

Likewise, another drawback of low-voltage switchboards known to date is based on the fact that to mount the outlets with a fuse-holder base access to the set of busbars inside the switchboard is required, wherein the busbars are located next to one another with a small separating distance between them, with the subsequent danger for operators, i.e., danger of accidentally contacting live parts. The same occurs when working on the auxiliary and measuring circuits of the low-voltage switchboard. Furthermore, any fault or defect occurring in the auxiliary circuits of the switchboard is reflected in the set of busbars thereof, short circuits between phases or between a phase and the metal enclosure or ground being able to occur.

Furthermore, any object falling inside the low-voltage switchboard, such as a tool, for example, can also cause a short circuit between phases or between a phase and the metal enclosure itself or ground.

Therefore, the level of protection or protection rating that its containing materials provide to it against the entrance of foreign matter or against accidentally contacting live parts is important in a low-voltage switchboard.

On the other hand, there are usually two types of low-voltage switchboards in an installation, the line connection switchboard and the expansion switchboard. This second switchboard is used when there is a need to increase the outlets with a fuse-holder base due to an increase in the consumers connected to a low-voltage switchboard. When there is a need to increase the outlets, this expansion switchboard, with its corresponding set of busbars and outlets with a fuse-holder base, is coupled to the line connection switchboard such that the low-voltage switchboard then has a larger number of outlets for supplying power to new consumers.

This expansion of the low-voltage switchboard is carried out by first interrupting the service of the switchboard itself for the sake of safety, i.e., putting said low-voltage switchboard out of service, since it is necessary to access parts of the switchboard which are live when said switchboard is in service, such as the set of busbars for connecting said set of busbars and the busbars of the expansion switchboard, for example. In order to put the low-voltage switchboard out of service, it is necessary to perform several operations in the installation where said low-voltage switchboard is located. Usually, when the installation has only one low-voltage switchboard, the voltage of the medium/low-voltage transformer must first be cut off, then the switchboard is sectioned both upstream and downstream of the switchboard, thus cutting off the power supply of the switchboard, and next the set of busbars must be grounded, part of the switchboard dismantled and the set of busbars of the latter coupled with the busbars of the expansion switchboard by means of flat bars and screws. The installation is finally powered up again once the expansion is performed.

This interruption of service for expanding the low-voltage switchboard involves the drawback of cutting off power to consumers while the expansion work lasts, which means that service quality drops, further translating into an installation that is likely to experience faults due to a possible poor connection of the expansion switchboard since the connections are screwed together by means of flat bars, into modifications in which performing expansion work involves a long interruption of consumer service over time, and into modifications or work involving a large number of operations. However, the expansion of the low-voltage switchboard especially involves the intervention of operators who may run the risk of electrocution accidents since some vital power supplies of the installation are still live during the expansion.

Furthermore, low-voltage switchboards comprise an auxiliary or emergency line connection, which allows connecting an external auxiliary power source, such as a generator, for example, which is frequently used when there is an electrical power generation deficit somewhere or when the power is cut off, and it thus allows supplying electrical power to consumers. In some low-voltage switchboards the auxiliary line connection is integrated in the actual enclosure of the switchboard, and in other cases it is integrated in the handling means comprising the function of insulating the low-voltage switchboard from the power supply.

So it is sometimes necessary to connect the external auxiliary power source to the low-voltage switchboard, for example because there is a power supply deficit, a load transfer, a need to replace the medium-voltage/low-voltage transformer or a need to perform maintenance or repair work in installations in which the low-voltage switchboard is located. On these occasions, said connection is performed when the switchboard is out of service, i.e., the low-voltage switchboard is put out of service before connecting the external auxiliary power source. To that end, the upstream connections coming from the medium-voltage/low-voltage transformer must be sectioned, and the connections located downstream of the low-voltage switchboard must be sectioned before connecting cables of the external auxiliary power source. This involves both a wait time for consumers until the supply is restored and the need to comply with a guideline that assures that the operations are safe.

Examples of the state of the art are shown on US1400950 and US1700757.

In particular, the US1400950 discloses an electrical low-voltage power distribution equipment comprising at least one set of busbars and an insulation module comprising at least one outlet with a fuse-holder base, the set of busbars being at least partially encapsulated in said insulation module made of insulating material, preventing accidental access to live parts.

### Description of the Invention

The electrical low-voltage power distribution equipment object of the invention seeks to solve each and every one of the aforementioned problems. This electrical equipment, also referred to as low-voltage switchboard, which can be applied in installations such as electrical transformation and/or distribution substations, for example, allows distributing electrical power to different consumers once said power has been transformed to the low-voltage range. To that end, the electrical equipment comprises at least one set of busbars, an outlet with a fuse-holder base, an auxiliary line connection, auxiliary and measuring circuit outlets, etc.

The mentioned set of busbars of the electrical equipment is at least partially encapsulated in at least one module made of an insulating material, such that the busbars are separated and therefore insulated from one another, said set of busbars in turn being insulated from the remaining components of the electrical equipment and from the installation in which said equipment is located, as further defined in claim 1. Due to the encapsulation of the set of busbars of the equipment, in the event of a short circuit it does not travel through the equipment, but rather is limited to the area where it occurred, allowing the equipment to maintain service and preventing an internal arc from being generated, which could have fatal consequences. Encapsulating the set of busbars also allows reducing distances between busbars as well as between the set of busbars and the remaining components of the electrical equipment, thereby obtaining more compact electrical equipment. On the other hand, operator safety increases since accidentally contacting live parts is prevented, short circuits between phases or between a phase and ground due for example to objects falling inside the electrical equipment or due to any fault or defect occurring in any other electrical component of the equipment since this defect is not reflected in the encapsulated set of busbars, are prevented.

Furthermore, to improve safety, the low-voltage electrical equipment object of the invention has each of the functional units described above, i.e., the set of busbars, outlets with a fuse-holder base, the auxiliary line connection, the handling base and auxiliary and measuring circuit outlets, incorporated in independent compartments, and in each compartment each of the phases and the neutral are separated from one another by means of walls. Therefore, due to compartmentalization internal arcs cannot occur because any defect is limited to the area where it occurred and cannot extend to other areas.

The electrical equipment object of the invention is furthermore prepared for possible expansion of same, if needed, either due to an increase in consumers connected to the equipment or due to a higher energy demand. Said expansion can be performed when the equipment is live, i.e., without putting the low-voltage electrical equipment out of service, maintaining the supply to consumers without them being aware of said expansion. To that end, the electrical equipment comprises at least one connection point encapsulated in the same insulation module of the set of busbars, such that said connection point can be electrically plug-in coupled with at least another connection point encapsulated in another insulation module by means of at least one coupling device. Electrical coupling can thus be performed without interrupting service of the electrical equipment, given that the encapsulation of said connection points allows maintaining the protection level or protection rating of IP2X at all times, assuring protection against the entrance of solid bodies and against accidentally contacting live parts. If expansion of the electrical equipment is unnecessary, the mentioned connection points can be insulated by means of an insulating cap, for example.

On the other hand, the electrical equipment object of the invention further comprises at least one auxiliary line connection at least partially encapsulated in the insulation module, said auxiliary line connection allowing the connection of an external power source, such as a generator, for example, when it is live or in service. An external power source can be connected without interrupting consumer service, for example if a load transfer must be performed because the medium-voltage/low-voltage distribution transformer has to be changed. Therefore, during this time in which the distribution transformer is changed, the consumer is not aware of anything because said change does not involve the supply being cut off. Even if a process or guideline had to be complied with in the load transfer in which the power supply to consumers has to be cut off, the time in which power is off would be very brief, just a few seconds, because the generator could be connected to the low-voltage electrical equipment beforehand and it would only be necessary to close the circuit breaker of the generator.

The external power source can be connected without interrupting service of the electrical equipment as a result of the encapsulation of the auxiliary line connection in the insulation module, such that the protection level or protection rating of IP2X is maintained at all times, assuring protection against the entrance of solid bodies and against accidentally contacting live parts. If the connection of an external power source is unnecessary, the auxiliary line connection can be insulated by means of an insulating cap, for example.

### Description of the Drawings

To complement the description that is being made and for the purpose of aiding to better understand the features of the invention according to a preferred practical embodiment thereof, a set of drawings is attached as an integral part of said description in which the following has been depicted with an illustrative and nonlimiting character:
Figure 1 shows a front view of a possible practical embodiment of the electrical low-voltage power distribution equipment object of the invention.
Figure 2 shows a front view of the electrical distribution equipment of the invention to which there is coupled an expansion module for increasing the number of outlets with a fuse-holder base.
Figure 3 shows a front view of the electrical equipment of the preceding drawing before coupling the expansion module.

### Preferred Embodiment of the Invention

According to a possible practical embodiment of the invention, the drawings show electrical low-voltage power distribution equipment, also referred to as low-voltage switchboard, for distributing electrical power among consumers once said power has been transformed to the low-voltage range.

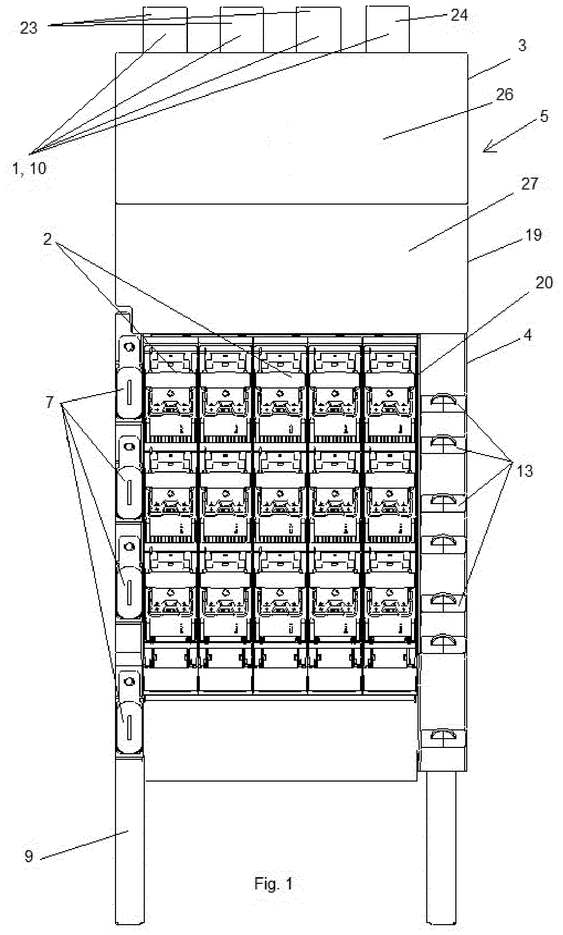

Therefore, and as seen in Figure 1, the electrical power distribution equipment (5) comprises at least one set of busbars (1) made, for example, of copper, aluminum or partly of aluminum and partly of copper, and which is at least partially encapsulated in at least one insulation module (4), such as that made of polymer concrete, for example. The set of busbars (1) consist of the phases (23) and the neutral (24), such that the encapsulation thereof allows both said phases (23) and said neutral (24) to be insulated from one another and in turn insulated from the remaining components of the electrical power distribution equipment (5), such as the outlets with a fuse-holder base (2), the auxiliary line connections(12), auxiliary and measuring circuit outlets (14), etc., furthermore preventing access to active live parts.

As shown in Figures 1-3, the electrical power distribution equipment (5) has each of its functional units, such as the set of busbars (1), the outlets with a fuse-holder base (2), the auxiliary line connections (12), at least one handling base (3) and auxiliary and measuring circuit outlets (14), incorporated in independent compartments or modules. Therefore, the set of busbars (1) and the handling base (3) are incorporated in a compartment (18), the outlets with a fuse-holder base (2) are incorporated in a compartment (20), the auxiliary line connection (12) is incorporated in an insulation module (4) and auxiliary and measuring circuit outlets (14) are incorporated in a compartment (19), each of the phases (23) and the neutral (24) being separated from others by means of walls (21). The compartment (18) of the handling base (3) and the compartment (19) of the auxiliary and measuring circuit outlet (14) can be protected with at least one removable cover (26, 27), respectively, that allows accessing them.

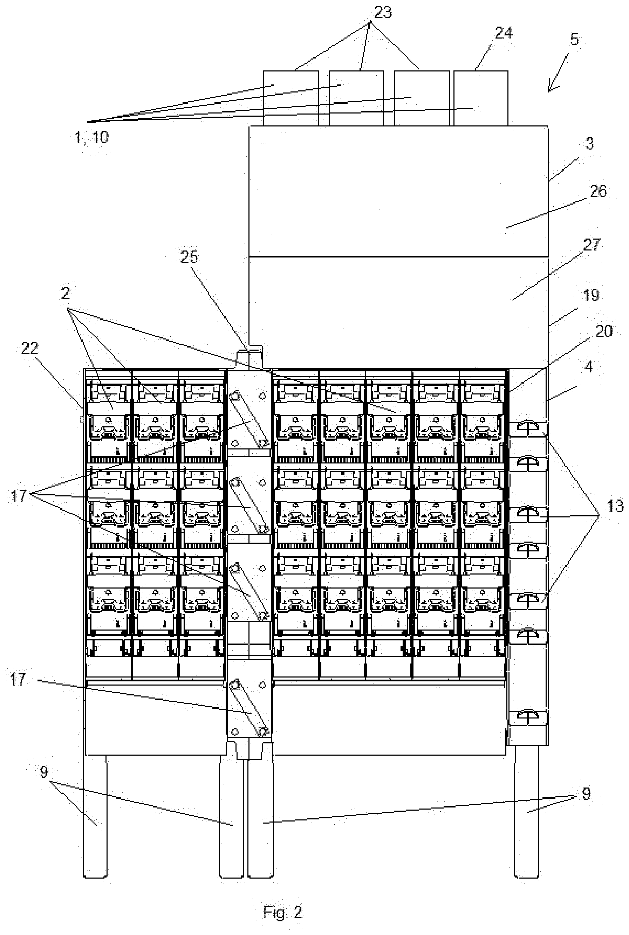

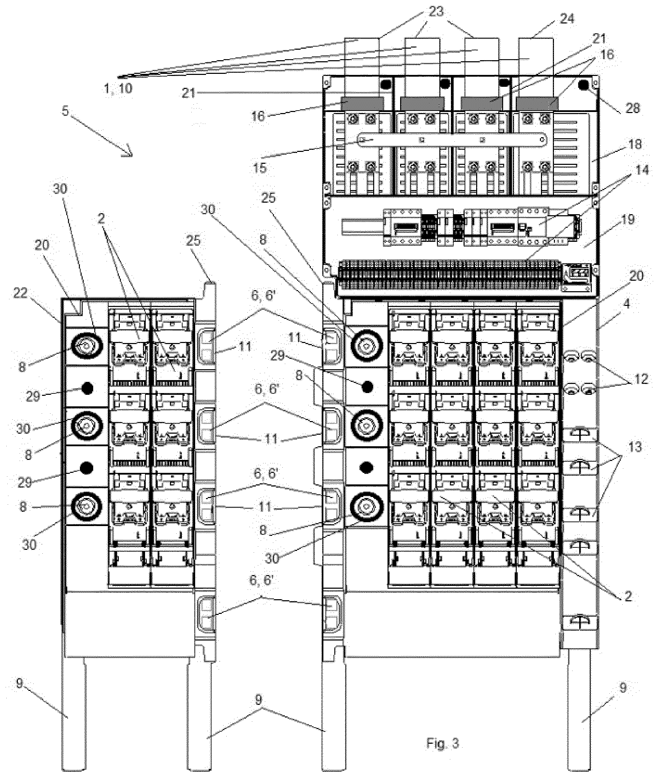

As can be seen in the possible embodiment shown in Figures 2 and 3, the electrical power distribution equipment (5) can be expanded when it is live, i.e., without putting it out of service, and therefore, without cutting off the power to consumers connected to it. Expansion involves coupling at least one insulation module (4) of the electrical power distribution equipment (5) with at least another insulation module (22). The insulation modules (4, 22) comprise at least one outlet with a fuse-holder base (2) installed on one of its sides, such that with the coupling of both insulation modules (4, 22), the number of outlets with a fuse-holder base (2) increases. Each of the insulation modules (4, 22) comprises at least one encapsulated connection point (6, 6'), said points (6, 6') being electrically coupled with one another by means of at least one coupling device (17). If expansion of the electrical power distribution equipment (5) is unnecessary, the mentioned connection points (6, 6') can be insulated by means of at least one insulating cap (7), as shown in Figure 1.

According to a possible embodiment, the insulation modules (4, 22) can comprise at least one hole (8) allowing the connection between outlets with a fuse-holder base (2) and the set of busbars (1). Said insulation modules (4, 22) can also comprise at least one mechanical means (29) for securing the outlets with a fuse-holder base (2), as well as at least one mechanical coupling point (25) for the mechanical coupling between both insulation modules (4, 22), as can be seen in Figures 2 and 3. The holes (8) can include at least one current measuring means (30) which can be incorporated or replaced on site.

The set of busbars (1) comprises at least one set of line connection busbars (10) and at least one set of distribution busbars (11).

As shown in Figure 3, the set of line connection busbars (10), at least one handling means (15) for insulating the electrical power distribution equipment (5) from the power supply and/or for grounding the set of distribution busbars (11), at least one voltage testing means (28) and at least one current measuring means (16) can be incorporated inside the compartment (18) of the handling base (3). On the other hand, the voltage testing means (28) can be installed both upstream and downstream of the handling means (15).

The electrical power distribution equipment (5) has at least one auxiliary line connection (12) at least partially encapsulated in the insulation module (4) which allows connecting an external power source (such as a generator, for example) to said electrical power distribution equipment (5) when it is live or in service. Just like the operation for expanding the electrical power distribution equipment (5), an external power source can be connected without interrupting consumer service. Encapsulating the auxiliary line connection (12) in the insulation module (4) allows maintaining the protection level or protection rating of IP2X at all times, assuring protection against the entrance of solid bodies and against accidentally contacting live parts. If the connection of an external power source is unnecessary, the auxiliary line connection (12) can be insulated by means of at least one second insulating cap (13), as shown in Figures 1-3.

The electrical power distribution equipment (5) also comprises at least one auxiliary and measuring circuit outlet (14) which can include auxiliary voltage and current outlets, voltage absence testing means, current measuring means, communication and remote control means, for example of low-voltage meters and/or Smart Grids, low-voltage grid supervising and monitoring means, protection means, visual voltage presence indicators, etc., thereby facilitating grid automation.

Finally, the electrical power distribution equipment (5) can be installed on a wall or on the ground, comprising in this latter case at least one support (9) for mounting on the ground.

## Claims

1. Electrical low-voltage power distribution equipment (5) comprising the functional units:
- at least one set of busbars (1);
- at least one outlet with a fuse-holder base (2);
- at least one auxiliary line connection (12); and
- at least one auxiliary and measuring circuit outlet (14) said functional units are incorporated in independent compartments, wherein the at least one set of busbars (1) is at least partially encapsulated in at least one insulation module (4) made of insulating material, the busbars being insulated from one another and from the remaining components of the electrical power distribution equipment (5), preventing accidental access to live parts, and wherein the at least one auxiliary line connection (12) is for connecting an external auxiliary power source and is partially encapsulated in the insulation module (4), preventing accidental access to live parts.

2. Electrical equipment (5) according to claim 1, **characterized in that** it comprises at least one connection point (6) at least partially encapsulated in the insulation module (4).

3. Electrical equipment (5) according to claim 2, **characterized in that** it comprises at least one coupling device (17) for electrically coupling the connection point (6) to another connection point (6') encapsulated in another insulation module (22).

4. Electrical equipment (5) according to claim 3, **characterized in that** the connection points (6, 6') comprise at least one insulating cap (7).

5. Electrical equipment (5) according to claim 2, **characterized in that** it comprises at least one auxiliary line connection (12) at least partially encapsulated in the insulation module (4) which allows connecting an external power source to the electrical equipment (5) when it is live.

6. Electrical equipment (5) according to claim 1, **characterized in that** the outlets with a fuse-holder base (2) are installed on one side of the insulation module (4).

7. Electrical equipment (5) according to claim 1 or 6, **characterized in that** the insulation module (4) comprises at least one hole (8) allowing the connection between outlets with a fuse-holder base (2) and the set of busbars (1), as well as at least one mechanical means (29) for securing the outlets with a fuse-holder base (2) and at least one mechanical coupling point (25) for mechanically coupling to another module (22).

8. Electrical equipment (5) according to claim 7, **characterized in that** the holes (8) comprise at least one current measuring means (30).

9. Electrical equipment (5) according to any of the preceding claims, **characterized in that** the set of busbars (1) comprises at least one set of line connection busbars (10) and at least one set of distribution busbars (11).

10. Electrical equipment (5) according to any of the preceding claims, **characterized in that** it comprises at least one handling base (3).

11. Electrical equipment (5) according to claim 10, **characterized in that** the handling base (3) includes the set of line connection busbars (10), handling means (15) for insulating the electrical equipment (5) from the power supply and/or for grounding the set of distribution busbars (11), as well as at least one voltage testing means (28) and at least one current measuring means (16).

12. Electrical equipment (5) according to any of the preceding claims, **characterized in that** it comprises at least one auxiliary and measuring circuit outlet (14) in turn comprising auxiliary voltage and current outlets, voltage absence testing means, current measuring means, communication and remote control means, low-voltage grid supervising and monitoring means, protection means and visual voltage presence indicators.

13. Electrical equipment (5) according to any of the preceding claims, **characterized in that** at least one set of busbars (1), an outlet with a fuse-holder base (2), an auxiliary line connection (12), a handling base (3) and an auxiliary and measuring circuit outlet (14) are incorporated in independent compartments (18, 19, 20, 4) where each of the phases (23) and the neutral (24) are separated from one another by means of walls (21).

## Patentansprüche

1. Elektrische Niederspannungs-Stromverteilungsausrüstung (5), umfassend die funktionalen Einheiten:
wenigstens einer Menge von Sammelschienen (1);
wenigstens eines Anschlusses mit einem Sicherungshaltersockel (2);
wenigstens einer Hilfsleitungsverbindung (12); und
wenigstens eines Hilfs- und Messkreisanschlusses (14), wobei die funktionalen Einheiten in unabhängigen Abteilen angeordnet sind, wobei
die wenigstens eine Menge von Sammelschienen (1) wenigstens teilweise in wenigstens einem aus Isoliermaterial hergestellten Isoliermodul (4) gekapselt ist, wobei die Sammelschienen voneinander und von den restlichen Komponenten der elektrischen Stromverteilungsausrüstung (5) isoliert sind, was einen versehentlichen Zugang zu stromführenden Teilen verhindert,
und wobei
die wenigstens eine Hilfsleitungsverbindung (12) zum Anschluss einer externen Hilfsstromquelle ausgebildet ist und teilweise im Isoliermodul (4) gekapselt ist, um einen versehentlichen Zugang zu stromführenden Teilen zu verhindern.

2. Elektrische Ausrüstung (5) nach Anspruch 1, **dadurch gekennzeichnet, dass** sie wenigstens einen wenigstens teilweise im Isoliermodul (4) gekapselten Anschlusspunkt (6) umfasst.

3. Elektrische Ausrüstung (5) nach Anspruch 2, **dadurch gekennzeichnet, dass** sie wenigstens eine Kopplungsvorrichtung (17) zum elektrischen Koppeln des Anschlusspunkts (6) mit einem in einem anderen Isoliermodul (22) gekapselten anderen Anschlusspunkt (6') umfasst.

4. Elektrische Ausrüstung (5) nach Anspruch 3, **dadurch gekennzeichnet, dass** die Anschlusspunkte (6, 6') wenigstens einen Isolierdeckel (7) umfassen.

5. Elektrische Ausrüstung (5) nach Anspruch 2, **dadurch gekennzeichnet, dass** sie wenigstens eine wenigstens teilweise im Isoliermodul (4) gekapselte Hilfsleitungsverbindung (12) umfasst, die das Verbinden einer externen Stromquelle mit der elektrischen Ausrüstung (5) ermöglicht, wenn sie stromführend ist.

6. Elektrische Ausrüstung (5) nach Anspruch 1, **dadurch gekennzeichnet, dass** die Anschlüsse mit einem Sicherungshaltersockel (2) an einer Seite des Isoliermoduls (4) installiert sind.

7. Elektrische Ausrüstung (5) nach Anspruch 1 oder 6, **dadurch gekennzeichnet, dass** das Isoliermodul (4) wenigstens ein Loch (8), welches das Verbinden der Anschlüsse mit einem Sicherungshaltersockel (2) und der Menge von Sammelschienen (1) ermöglicht, sowie wenigstens ein mechanisches Mittel (29) zum Befestigen der Anschlüsse mit einem Sicherungshaltersockel (2) und wenigstens einen mechanischen Kopplungspunkt (25) zum mechanischen Koppeln mit einem anderen Modul (22) umfasst.

8. Elektrische Ausrüstung (5) nach Anspruch 7, **dadurch gekennzeichnet, dass** die Löcher (8) wenigstens ein Strommessmittel (30) umfassen.

9. Elektrische Ausrüstung (5) nach einem der vorhergehenden Ansprüche, **dadurch gekennzeichnet, dass** die Menge von Sammelschienen (1) wenigstens eine Menge von Leitungsverbindungssammelschienen (10) und wenigstens eine Menge von Verteilungssammelschienen (11) umfasst.

10. Elektrische Ausrüstung (5) nach einem der vorhergehenden Ansprüche, **dadurch gekennzeichnet, dass** sie wenigstens eine Handhabungsbasis (3) umfasst.

11. Elektrische Ausrüstung (5) nach Anspruch 10, **dadurch gekennzeichnet, dass** die Handhabungsbasis (3) die Menge von Leitungsverbindungssammelschienen (10), Handhabungsmittel (15) zum Isolieren der elektrischen Ausrüstung (5) von der Stromversorgung und/oder zum Erden der Menge von Verteilungssammelschienen (11) sowie wenigsten sein Spannungstestmittel (28) und wenigstens ein Strommessmittel (16) umfasst.

12. Elektrische Ausrüstung (5) nach einem der vorhergehenden Ansprüche, **dadurch gekennzeichnet, dass** sie wenigstens einen Hilfs- und Messkreisanschluss (14) umfasst, der wiederum Hilfsspannungs- und Hilfsstromanschlüsse, Mittel zum Testen auf Nichtanliegen von Spannung, Strommessmittel, Kommunikations- und Fernsteuerungsmittel, Niederspannungs-Netzaufsichts-/überwachungsmittel, Schutzmittel und optische Anzeigen für das Anliegen von Spannung umfasst.

13. Elektrische Ausrüstung (5) nach einem der vorhergehenden Ansprüche, **dadurch gekennzeichnet, dass** wenigstens eine Menge von Sammelschienen (1), ein Anschluss mit einem Sicherungshaltersockel (2), eine Hilfsleitungsverbindung (12) eine Handhabungsbasis (3) und ein Hilfs- und Messkreisanschluss (14) in unabhängigen Abteilen (18, 19, 20, 4) angeordnet sind, wobei jede der Phasen (23) und der Nullleiter (24) voneinander durch Wände (21) getrennt sind.

## Revendications

1. Equipement électrique de distribution de puissance à basse tension (5) comprenant les unités fonctionnelles suivantes :
- au moins un jeu de barres omnibus (1);
- au moins une sortie avec une base porte-fusible (2);
- au moins une connexion de ligne auxiliaire (12); et
- au moins une sortie de circuit auxiliaire et de mesure (14)
lesdites unités fonctionnelles sont incorporées dans des compartiments indépendants, dans lequel
l'au moins un jeu de barres omnibus (1) est au moins partiellement encapsulé dans au moins un module d'isolation (4) réalisé en matériau isolant, les barres omnibus étant isolées les unes des autres et des composants restants de l'équipement électrique de distribution de puissance (5), empêchant tout accès accidentel aux parties sous tension, et dans lequel
l'au moins une connexion de ligne auxiliaire (12) sert à connecter une source de puissance auxiliaire externe et est partiellement encapsulée dans le module d'isolation (4), empêchant tout accès accidentel aux parties sous tension.

2. Equipement électrique (5) selon la revendication 1, **caractérisé en ce qu'**il comprend au moins un point de connexion (6) au moins partiellement encapsulé dans le module d'isolation (4).

3. Equipement électrique (5) selon la revendication 2, **caractérisé en ce qu'**il comprend au moins un dispositif de couplage (17) pour coupler électriquement le point de connexion (6) à un autre point de connexion (6') encapsulé dans un autre module d'isolation (22).

4. Equipement électrique (5) selon la revendication 3, **caractérisé en ce que** les points de connexion (6, 6') comprennent au moins un capuchon isolant (7).

5. Equipement électrique (5) selon la revendication 2, **caractérisé en ce qu'**il comprend au moins une connexion de ligne auxiliaire (12) au moins partiellement encapsulée dans le module d'isolation (4) qui permet de connecter une source de puissance externe à l'équipement électrique (5) lorsqu'il est sous tension.

6. Equipement électrique (5) selon la revendication 1, **caractérisé en ce que** les sorties avec une base porte-fusible (2) sont installées sur un côté du module d'isolation (4).

7. Equipement électrique (5) selon la revendication 1 ou 6, **caractérisé en ce que** le module d'isolation (4) comprend au moins un trou (8) permettant la connexion entre des sorties avec une base porte-fusible (2) et le jeu de barres omnibus (1), ainsi qu'au moins un moyen mécanique (29) pour fixer les sorties avec une base porte-fusible (2) et au moins un point de couplage mécanique (25) pour le couplage mécanique à un autre module (22).

8. Equipement électrique (5) selon la revendication 7, **caractérisé en ce que** les trous (8) comprennent au moins un moyen de mesure de courant (30).

9. Equipement électrique (5) selon l'une quelconque des revendications précédentes, **caractérisé en ce que** le jeu de barres omnibus (1) comprend au moins un jeu de barres omnibus de connexion de ligne (10) et au moins un jeu de barres omnibus de distribution (11).

10. Equipement électrique (5) selon l'une quelconque des revendications précédentes, **caractérisé en ce qu'**il comprend au moins une base de manipulation (3).

11. Equipement électrique (5) selon la revendication 10, **caractérisé en ce que** la base de manipulation (3) comporte le jeu de barres omnibus de connexion de ligne (10), des moyens de manipulation (15) pour isoler l'équipement électrique (5) de l'alimentation électrique et/ou pour mettre à la terre le jeu de barres omnibus de distribution (11), ainsi qu'au moins un moyen de test de tension (28) et au moins un moyen de mesure de courant (16).

12. Equipement électrique (5) selon l'une quelconque des revendications précédentes, **caractérisé en ce qu'**il comprend au moins une sortie de circuit auxiliaire et de mesure (14) comprenant à son tour des sorties de tension et de courant auxiliaires, des moyens de test d'absence de tension, des moyens de mesure de courant, des moyens de communication et de télécommande, des moyens de supervision et de surveillance de réseau basse tension, des moyens de protection et des indicateurs visuels de présence de tension.

13. Equipement électrique (5) selon l'une quelconque des revendications précédentes, **caractérisé en ce qu'**au moins un jeu de barres omnibus (1), une sortie avec une base porte-fusible (2), une connexion de ligne auxiliaire (12), une base de manipulation (3) et une sortie de circuit auxiliaire et de mesure (14) sont incorporés dans des compartiments indépendants (18, 19, 20, 4) où chacune des phases (23) et le conducteur neutre (24) sont séparés les uns des autres au moyen de parois (21).
